# EUROPEAN PATENT APPLICATION

(11) **EP 4 253 259 A1**
(43) Date of publication of application: **04.10.2023**
(21) Application number: 22382286.7
(22) Date of filing: 28.03.2022
(51) Int. Cl.: B65B 7/16, B65B 51/14, B29C 65/78, B29C 65/00, B65B 61/00, B31B 120/40, B65B 31/02

(54) **CONTROL METHOD FOR A THERMO-SEALING MACHINE, AND THERMO-SEALING MACHINE**

(71) Applicant: Ulma Packaging, S.Coop., 20560 Oñati (ES)
(72) Inventor: ETXANIZ ORTIZ, Julen, 20560 Oñati (ES)
(74) Representative: Igartua, Ismael

(57) **Abstract**

The invention relates to a control method for a thermo-sealing machine. The method comprises arranging a tray (5) and a plastic film (300) above said tray (5) between an upper tool (1) and a lower tool (2); subsequently moving the lower tool (2) towards the upper tool (1) in a first vertical direction (D1) until said tools (1, 2) cooperate with one another; sealing said plastic film (300) to said tray (5), a set being generated as a result of the sealing; and subsequently moving the lower tool (2) in a second vertical direction (D2) opposite the first direction (D1). The method further comprises applying a suction on the lower part of the tray (5) of the set during at least part of the movement of the lower tool (2) in the second direction (D2).

## Description

### TECHNICAL FIELD

The present invention relates to control methods for thermo-sealing machines and to thermo-sealing machines.

### PRIOR ART

In thermo-sealing machines, a plastic film is sealed to one or more (preformed or flat) trays.

Machines of this type comprise a sealing station with an upper tool and a lower tool vertically facing one another, which are separated when said lower tool is in an inactive position. The sealing station further comprises a tray support on which the tray is arranged, when said tray is supplied to the sealing station, with an outer contour of the tray (the flap) laterally protruding from said tray support.

With the lower tool in the inactive position, in addition to the tray, a plastic film is also supplied to said sealing station to be arranged on the tray. The lower tool is moved in a first vertical direction towards the upper tool, and during at least part of said movement it pushes the tray until the plastic film is generally gripped between both tools in an active position of the lower tool. With the tools of the sealing station arranged as such, the plastic film is sealed to the tray, a set formed by at least the tray and said film sealed to said tray being generated.

The lower tool is subsequently moved in a second vertical direction opposite the first direction, to the inactive position of the sealing station. The tray of the generated set is thus supported on the tray support and accessible so that it can be handled and taken to wherever required.

WO2014091503A1 discloses a sealing station in which the lower tool is moved as described.

### DISCLOSURE OF THE INVENTION

The object of the invention is to provide a control method for a thermo-sealing machine and an associated thermo-sealing machine, as defined in the claims.

The method comprises:
- arranging a tray and a plastic film above said tray in a sealing station, between an upper tool and a lower tool of said sealing station vertically facing one another, when the lower tool is in an inactive position in which it is vertically spaced from the upper tool;
- subsequently moving the lower tool towards the upper tool in a first vertical direction, such that the lower tool contacts the tray in an intermediate position of said lower tool during said movement, and said lower tool moves said tray during said movement from the intermediate position until reaching an active position of the lower tool in which both tools cooperate with one another;
- sealing said plastic film to said tray, with said lower tool in the active position, a set formed by at least the tray and the plastic film sealed to the tray as a result of the sealing being generated; and
- subsequently moving the lower tool in a second vertical direction opposite the first direction to the inactive position.

For the purpose of increasing the performance and/or productivity of the thermo-sealing machine in which the method is implemented, said method proposes acting on the operations carried out in the sealing station of said machine and, in particular, at least on post-sealing operations.

In that sense, the method further comprises applying a suction on the lower part of the tray of the set, from under same, during at least part of the movement of the lower tool in the second direction. This allows the set formed by at least a tray and a plastic film sealed to the tray to be kept in position during the downward movement of the lower tool, without the risk of it being dislodged from its position and negatively affecting the subsequent ejection of said set out of the sealing station, whereby it is possible to cause a faster downward movement of the lower tool, and accordingly increase the performance and/or productivity of the machine without the need to modify the plastic film pre-sealing operations, and even those needed to perform sealing, which would require more complex changes both in the cycle of the machine and in certain elements of the sealing station (the upper tool, for example) of said machine. It is therefore even possible to reach accelerations greater than the acceleration of gravity during the movement of the lower tool in the second vertical direction (during the opening of the sealing station), without the assemblies being negatively affected by said accelerations, preventing said assemblies from being suspended outside the lower tool at the start of said downward movement, for example, and/or by the sudden decelerations of the set upon suddenly stopping at the end of its downward movement, preventing the assemblies from being able to bounce and be incorrectly positioned, for example, because a suction is applied on the lower part thereof, so the set generation speed can be increased.

The method may furthermore be particularly advantageous in some applications such as those which require sealing a plastic film to a cellulosic tray, resulting in a cellulosic tray with an impermeable film sealed like a second skin without a product therein, or in applications for packaging low-weight products (such as sliced products, etc., for example), resulting in a sealed package with product therein, given that in these cases the risk of the set formed by at least the tray and the plastic film sealed to said tray being moved out of place is higher, at the start of the downward movement and at the end of the downward movement, due to the low weight of said set.

These and other advantages and features of the invention will become apparent in view of the figures and detailed description of the invention.

### DESCRIPTION OF THE DRAWINGS

Figure 1 shows a first embodiment of a thermo-sealing machine configured for implementing an embodiment of the method of the invention.
Figure 2 shows a section view of the sealing station of the machine of Figure 1, with a lower tool in an active position.
Figure 3 shows a section view of the sealing station of the machine of Figure 1, with the lower tool in an intermediate position.
Figure 4 shows a section view of the sealing station of the machine of Figure 1, with the lower tool in an inactive position.
Figure 5 shows a section view of a sealing station of another embodiment of the machine of the invention, with the lower tool in the active position.
Figure 6 shows a section view of a sealing station of another embodiment of the machine of the invention, with the lower tool in the active position.

### DETAILED DISCLOSURE OF THE INVENTION

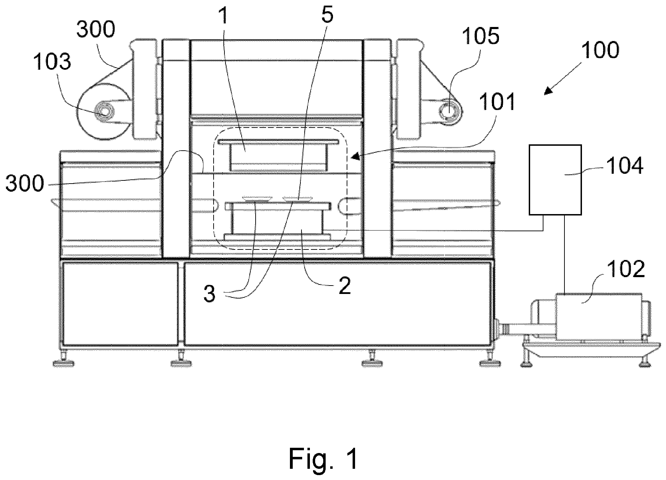

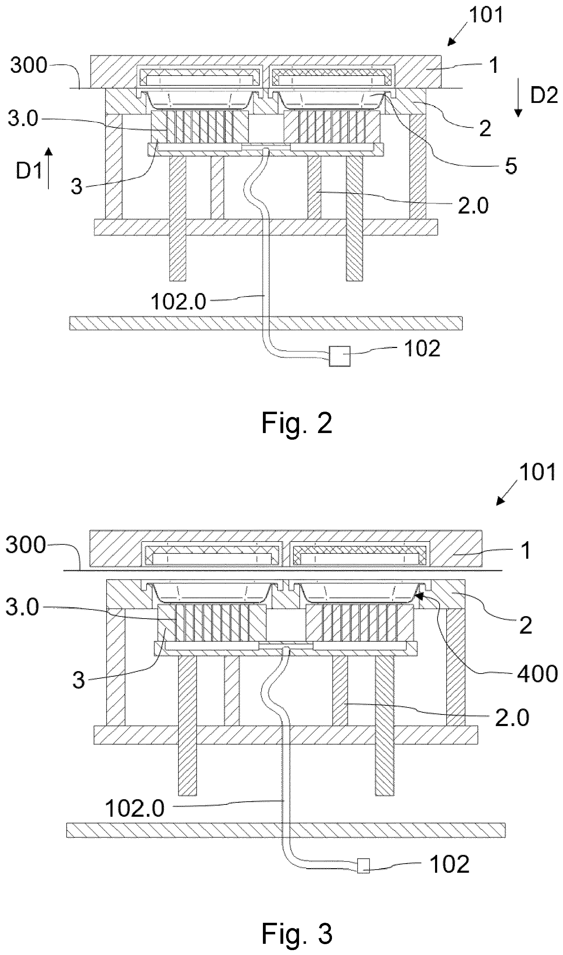

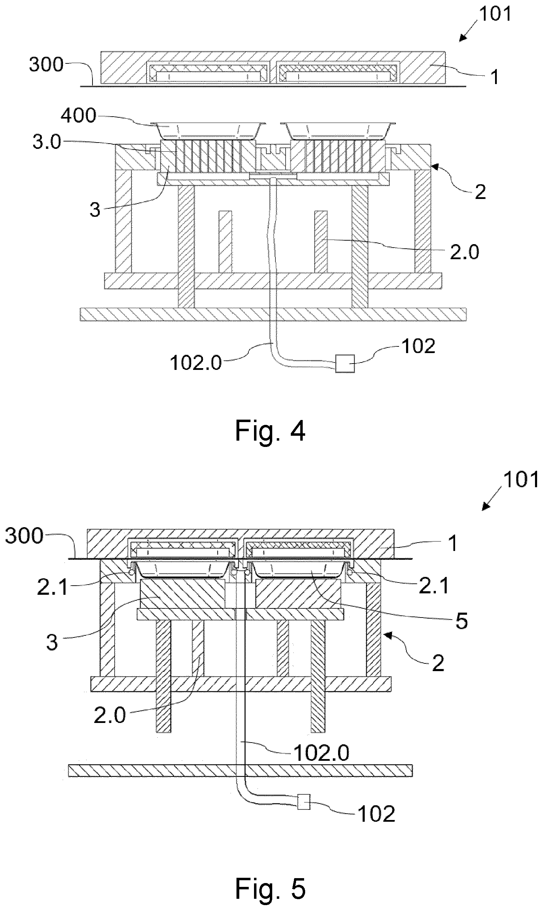

The proposed control method is adapted for implementation in a thermo-sealing machine 100, such as the one shown by way of example in Figure 1. The machine 100 comprises a sealing station 101 with an upper tool 1 and a lower tool 2 vertically facing one another, and the lower tool 2 is configured so that it can be moved between an inactive position, in which it is vertically separated from the upper tool 1 (see Figures 1 and 4 for example), and an active position in which it cooperates with said upper tool 1 (see Figure 2 for example).

The machine 100 may further comprise a film feeder 103 configured for supplying a continuous plastic film 300 to the sealing station 101, like in the embodiment of Figure 1, although a plastic film 300 having specific dimensions in accordance with the tray 5, for example, could be supplied. Preferably, the plastic film 300 supplied is continuous, such that it is wound in the form of a reel, and the film feeder 103 is in charge of supplying an extended film. Said machine 100 may further comprise a tray feeder not depicted in the figures for supplying at least one tray 5 to the sealing station, and the film feeder 103 is configured for supplying the plastic film 300 above the tray 5 to said sealing station 101. The tray 5 can be flat, or it can be like the tray depicted in the figures and comprise a tray cavity surrounded by a tray flap and conferring a certain height (from the base of the cavity to the flap) to the tray. The sealing station 101 depicted in the figures is configured for receiving a plurality of trays 5 and, therefore, for sealing the plastic film 300 to a plurality of trays 5, although the method is likewise applicable in machines 100 with sealing stations 101 configured for receiving a single tray 5.

With the lower tool 2 in the active position, said lower tool 2 and the upper tool 1 cooperate with one another sealing the plastic film to the tray 5. For example, the upper tool 1 (or a sealing element arranged within the upper tool 1, for example) is heated, and this heat causes the plastic film 300 to be sealed to the tray 5. Depending on the type of package to be generated (second skin packaging or modified atmosphere packaging, for example), the type of sealing and the elements comprised in the upper tool will be different.

The method comprises arranging a tray 5 and a plastic film 300 above said tray 5 between the tools 1 and 2 of the sealing station 101 when the lower tool 2 is in the inactive position; and subsequently moving the lower tool 2 towards the upper tool 1, in a first vertical direction D1, until both tools 1 and 2 cooperate with one another in an active position of the lower tool 2 (depicted in Figure 2). During said movement of the lower tool 2 in the first direction D1, in an intermediate position between the inactive position and the active position, the lower tool 2 contacts the tray 5 and after that pushes it during its movement to the active position, said tray 5 thus moving upward with said lower tool 2.

With the lower tool 2 in the active position, the plastic film 300 is sealed to the tray 5, and in the embodiments in which, for example, a continuous plastic film 300 from a reel is fed to the sealing station 101, the surplus plastic film 300 is cut, the machine 100 further comprising a take-up device 105 for taking up the surplus plastic film 300 that is not used with the trays 5.

In some cases, the plastic film 300 is sealed to the tray 5 like a lining for the tray 5 (particularly when the tray is made of a cellulosic material, in which cases a plastic lining is required for later supporting the product to be packaged), the product to be packaged being arranged on said plastic film 300 covering at least a large part of the tray 5 in a subsequent step (and outside of the sealing station 101). In other cases, the tray 5 is introduced in the sealing station 101 with a product to be packaged, and the plastic film 300 is sealed to the tray 5 such that it covers the product, said product thus being packaged already at the outlet of said sealing station 101. In any of the cases, after said sealing, a set 400 formed by at least the tray 5 and the plastic film 300 sealed to the tray 5 is obtained (and in some cases, said set 400 will also include a product packaged therein).

Once the plastic film is sealed to the tray 5 and the plastic film 300 is cut in the embodiments requiring this (such as those shown in the figures), the lower tool 2 is moved in a second vertical direction D2 opposite the first direction D1, to the inactive position.

In the method, a suction is furthermore applied on the lower part of the tray 5 of the set 400, from under same, during at least part of the movement of the lower tool 2 in the second direction D2, such that as a result of said suction the acceleration and the speed of said lower tool 2 during said movement may be increased, which allows the productivity of the machine 100 to be increased, as described above.

In some embodiments, such as those shown in the figures, the machine 100 further comprises a tray support 3 on which the tray 5 is supported when said tray 5 is supplied to the sealing station 101. The tray support 3 vertically protrudes from the lower tool 2 when said lower tool 2 is in the inactive position (see Figures 1 and 4). In that sense, said tray support 3 is closer to the upper tool 1 than it is to the lower tool 2 when said lower tool 2 is in the inactive position, facilitating the feed and automatic ejection of trays 5 with respect to the sealing station 101.

In these embodiments, during the movement of the lower tool 2 in the first direction D1, the tray support 3 remains stationary at least until the lower tool 2 reaches the intermediate position, where it can be moved from there, or later, together with said lower tool 2 if needed. These machines 100 are configured such that the lower tool 2 advances between the inactive position and the intermediate position while the tray support 3 remains stationary, in contact with the tray 5, such that in the intermediate position of the lower tool 2, said lower tool 2 contacts the tray 5 and said lower tool 2 moves said tray 5 during the movement from the intermediate position to the active position of the lower tool 2 in which both tools 1 and 2 cooperate with one another. In some embodiments, such as those shown in the figures, from said intermediate position of the lower tool 2, the tray support 3 contacts stops 2.0 of the lower tool 2 and is moved integrally with said lower tool 2 from the intermediate position to the active position, at a proximal distance with respect to the tray 5 (if the stops 2.0 contact the tray support 3 once the lower tool 2 has exceeded the intermediate position) or in contact with the tray 5 (if the stops 2.0 contact the tray support 3 when the lower tool 2 reaches the intermediate position).

Similarly, when the lower tool 2 moves downward in the second direction D2, the set 400 again rests on only the tray support 3 once the lower tool 2 moves down below the intermediate position of said lower tool 2 shown in Figure 3 (which furthermore depicts the continuous plastic film 300 that is separated from the part of the plastic film sealed to the tray 5), said set 400 being accessible when the lower tool 2 is in the inactive position (see Figure 4) for subsequent operations, such as the ejection of said set 400 from the sealing station 101 for example. The tray support 3 moves downward together with the lower tool 2 if it previously moved upward with same (until the stops arranged in said lower tool 2 no longer contact said tray support 3 in the intermediate position during the downward stroke in the second direction D2).

In these embodiments, the suction on the lower part of the tray 5 of the set 400 is applied through the lower tool 2 and/or the tray support 3, preferably through contact surfaces of the lower tool 2 and/or the tray support 3 which are in contact with the tray 5.

When at least part of the suction is applied through the lower tool 2, it is preferably performed once the plastic film 300 is sealed to the tray 5, and where appropriate, once the plastic film 300 has been cut in the embodiments that require this. Said suction through the lower tool 2 is preferably applied with said lower tool 2 in contact with said tray 5 of the set 400, therefore being more efficient (given that when they are not in contact, the suction may not have any effect on the set 400 or may affect it to a lesser extent). For the same reason, when at least part of the suction is applied through the lower tool 2, said suction is performed through those areas of the lower tool 2 in contact with the tray 5.

Therefore, when at least part of the suction is applied through the lower tool 2, said suction is preferably stopped when the lower tool 2 reaches the intermediate position during its movement in the second direction D2, or before said lower tool 2 reaches said intermediate position, which is when the tray 5 of the set 400 no longer contacts the lower tool 2 as said lower tool 2 is still being moved to the inactive position and is supported on the tray support 3. Said suction preferably starts with the lower tool 2 in the active position and after the sealing of the plastic film 300, or when the lower tool 2 starts to move in the second direction D2 after the sealing of said plastic film 300. Suctioning the tray 5 of the set 400 against the lower tool 2 is particularly advantageous in those embodiments which require cutting the plastic film 300 sealed to the tray 5 (preferably to separate the part forming the set 400 from a continuous plastic film 300), not only because of the advantages set forth above which could also be obtained in this case, but rather because in these cases, it is ensured that even when the cut made has not completely separated the corresponding plastic film 300 from the rest of the continuous plastic film 300, the set 400 is prevented from being suspended outside the lower tool 2 and hanging from the continuous plastic film 300, as this suction causes the tearing or detachment of plastic film 300 forming the set 400 from the continuous plastic film 300, as a consequence of said suction and of the integral movement of said set 400 with the lower tool 2 in the second direction D2, without this entailing the machine 100 being stopped and, therefore, its productivity being reduced.

When at least part of the suction is applied through the tray support 3, at least part of said suction through the tray support 3 is applied with said tray support 3 in contact with said tray 5 of the set 400 (given that just like for the case of the lower tool 2, when they are not in contact, the suction may not have any effect on the set 400 or may affect it to a lesser extent). When at least part of the suction is applied through the tray support 3, said suction is stopped when the lower tool 2 exceeds the intermediate position during its movement in the second direction D2, as the set 400 is no longer supported on the lower tool 2, and preferably when the lower tool 2 is in the inactive position. When the lower tool 2 exceeds the intermediate position during the movement of said lower tool 2 in the second direction D2, the set 400 is no longer supported on said lower tool 2 given that it remains supported on the tray support 3 that remains stationary while the lower tool 2 is still being moved from the intermediate position to the inactive position. The suction applied through the tray support 3 allows a faster downward movement of the lower tool 2 because the set 400 is held against the tray support 3 regardless of the downward movement speed, preventing the sudden deceleration of said set 400 when it impacts against the tray support 3 from being able to move said set 400 from its position, for example bouncing against said tray support 3, and maintaining the suction until after the lower tool 2 has exceeded the intermediate position therefore allows productivity of the machine 100 to be increased, eliminating that risk, at least for the most part. In this case, said suction starts when the lower tool 2 reaches the intermediate position or before the lower tool 2 reaches said intermediate position, such that once the tray 5 of the set 400 contacts the tray support 3 in the intermediate position of the lower tool 2, said suction will keep it fixed to said tray support 3.

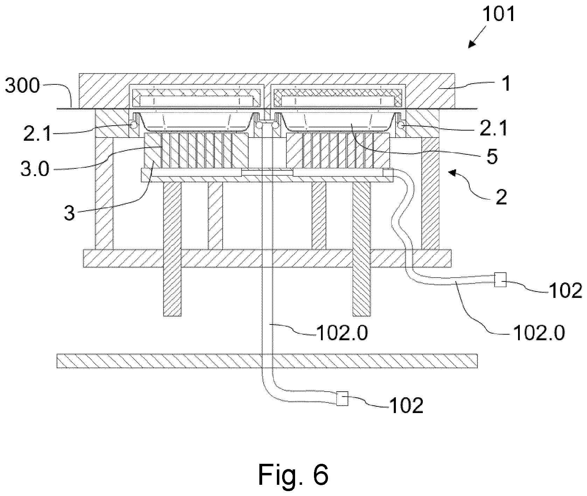

In some embodiments, suction will be performed through only the tray support 3 (like in the embodiment relative to Figures 2 to 4), through only the lower tool 2 (like in the embodiment relative to Figure 5), or through both the lower tool 2 and the tray support 3 (like in the embodiment relative to Figure 6), depending on process requirements.

The machine 100 further comprises suction means configured for applying suction through the lower tool 2 and/or through the tray support 3, whichever may be appropriate, and a control unit 104 communicated with the suction means and configured for applying suction on the lower part of the tray 5 according to the embodiment or configuration of the proposed method. The suction means comprise at least one suction pump 102 for applying suction. In cases where the machine 100 is adapted for applying a suction through the lower tool 2, said lower tool 2 comprises a plurality of holes 2.1 facing the upper tool 1 (see Figures 5 and 6) and communicated with the suction pump 102 through at least one suction conduit 102.0; and in cases where the machine 100 is adapted for applying a suction through the tray support 3, said tray support 3 comprises a plurality of holes 3.0 facing the upper tool 1 and communicated with the suction pump 102 through at least one suction conduit 102.0. In embodiments where the machine 100 is adapted for suctioning through the lower tool 2 and the tray support 3, the suction means may comprise a suction pump 102 with its suction conduit 102.0 for the lower tool 2, and a suction pump 102 with its suction conduit 102.0 for the tray support 3 (see Figure 6), or preferably, the machine 100 may comprise a single suction pump 102 with a suction conduit 102.0 for the lower tool 2 and another suction conduit 102.0 for the tray support 3.

## Claims

1. Control method for a thermo-sealing machine, comprising arranging a tray (5) and a plastic film (300) above said tray (5) in a sealing station (101), between an upper tool (1) and a lower tool (2) of said sealing station (101) vertically facing one another, when the lower tool (2) is in an inactive position in which it is vertically spaced from the upper tool (1); subsequently moving the lower tool (2) towards the upper tool (1) in a first vertical direction (D1), such that the lower tool (2) contacts the tray (5) in an intermediate position of the lower tool (2) during said movement, and said lower tool (2) moves the tray (5) during said movement from the intermediate position to an active position of said lower tool (2) in which both tools (1, 2) cooperate with one another; sealing said plastic film (300) to said tray (5), with said lower tool (2) in the active position, such that a set (400) formed by at least the tray (5) and the plastic film (300) sealed to the tray (5) is generated as a result of the sealing; and subsequently moving the lower tool (2) in a second vertical direction (D2) opposite the first direction (D1) to the inactive position, **characterized in that** the method further comprises applying a suction on the lower part of the tray (5) of the set (400), from under same, during at least part of the movement of the lower tool (2) in the second direction (D2).

2. Method according to claim 1, wherein with the tray (5) being arranged between the upper tool (1) and the lower tool (2), said tray (5) is supported on a tray support (3) of the machine (100) protruding towards the upper tool (1) with respect to the lower tool (2) when said lower tool (2) is in the inactive position, the lower tool (2) being moved vertically with respect to the tray support (3) when said lower tool (2) is moved vertically in the first direction (D1) between the inactive position and the intermediate position and when said lower tool (2) is moved vertically in the second direction (D2) between the intermediate position and the inactive position, and the suction being applied on the lower part of the tray (5) of the set (400) through the lower tool (2) and/or the tray support (3).

3. Method according to claim 1 or 2, wherein when at least part of the suction is applied through the lower tool (2), at least part of said suction is applied with said lower tool (2) in contact with said tray (5).

4. Method according to any of claims 1 to 3, wherein when at least part of the suction is applied through the lower tool (2), said suction is stopped when the lower tool (2) reaches the intermediate position during its movement in the second direction (D2) or before said lower tool (2) reaches said intermediate position.

5. Method according to any of claims 1 to 4, wherein when at least part of the suction is applied through the lower tool (2), said suction starts with the lower tool (2) in the active position and after the sealing of the plastic film (300), or when the lower tool (2) starts to move in the second direction (D2) after the sealing of the plastic film (300).

6. Method according to any of claims 2 to 5, wherein when at least part of the suction is applied through the tray support (3), at least part of said suction is applied with said tray support (3) in contact with said tray (5).

7. Method according to any of claims 2 to 6, wherein when at least part of the suction is applied through the tray support (3), said suction is stopped when the lower tool (2) exceeds the intermediate position during its movement in the second direction (D2).

8. Method according to any of claims 2 to 7, wherein when at least part of the suction is applied through the tray support (3), said suction starts when the lower sealing tool (2) reaches the intermediate position or before reaching said intermediate position.

9. Method according to any of claims 1 to 8, wherein the tray (5) is arranged between the upper tool (1) and the lower tool (2) with a product, the plastic film (300) being sealed to said tray (5) such that said plastic film (300) covers the product and acts like a lidding film for the set (400).

10. Method according to any of claims 1 to 8, wherein the plastic film (300) is sealed to the tray (5) such that it acts like a lining for the tray (5) of the set (400).

11. Method according to claim 10, wherein the tray (5) is made of a cellulosic material.

12. Method according to any of claims 1 to 11, wherein the tray (5) is flat.

13. Method according to any of claims 1 to 11, wherein the tray (5) comprises a tray cavity surrounded by a tray flap.

14. Method according to any of claims 1 to 13, comprising cutting the plastic film with the lower tool in the active position, the suction being applied on the lower part of the tray (5) through the lower tool (2) and/or the tray support (3).

15. Packaging machine comprising a sealing station (101) with an upper tool (1) and a lower tool (2) vertically facing one another and a tray support (3), **characterized in that** it further comprises suction means configured for applying suction through the lower tool (2) and/or through the tray support (3), and a control unit communicated with the suction means and configured for implementing a control method according to any of claims 1 to 14.
